# EUROPEAN PATENT APPLICATION

(11) **EP 4 636 734 A1**
(43) Date of publication of application: **22.10.2025**
(21) Application number: 24382413.3
(22) Date of filing: 18.04.2024
(51) Int. Cl.: G08G 5/00

(54) **METHOD AND SYSTEM FOR GENERATING ALTERNATE FLIGHT PLANS**

(71) Applicant: The Boeing Company, Arlington, VA 22202 (US)
(72) Inventor: LA CIVITA, Marco, 28027 MADRID (ES); POLAINA MORALES, Manuel, 80805 MUNICH (DE); VEGA ASTORGA, Rubén, 28042 MADRID (ES)
(74) Representative: ZBM Patents - Zea, Barlocci & Markvardsen

(57) **Abstract**

A device includes one or more processors configured to determine a probability that an airplane will follow a submitted flight path. The one or more processors are further configured to in response to a determination that the probability is less than a threshold, provide one or more alternate flight paths to a device.

## Description

### FIELD OF THE DISCLOSURE

The present disclosure is generally related to generating alternate flight plans.

### BACKGROUND

Existing air traffic management (ATM) systems primarily rely on predetermined flight plans for aircraft navigation. These flight plans define aircraft paths, altitudes, and speeds. They can be created through static models (e.g., fixed rules), air traffic control adjustments for real-time situations, or pilot deviations. This reliance on pre-defined and manually adjusted plans may result in several limitations, including: inefficiency as static models might not capture real-time variations in weather, traffic, or other factors, which may lead to suboptimal routes and inefficient fuel usage; lack of adaptability of pre-defined plans to dynamically adjust to unforeseen changes, which may potentially require manual intervention and delays; and limited ability to optimize conflicting efficiency goals associated with flights.

Accordingly, there is a need for a method and system configured to generate alternate flight plans that can use real-time variations in weather, traffic, or other factors and balance goals associated with use of resources, timeliness, and impact on other flights.

### SUMMARY

In a particular implementation, a device includes one or more processors configured to determine a probability that an aircraft will follow a submitted flight path. The one or more processors are further configured to in response to a determination that the probability is less than a threshold, provide one or more alternate flight paths to a device.

In a particular implementation, a method includes determining, at a computing device, a probability that an aircraft follows a submitted flight path. The method includes in response to determining that the probability is less than a threshold, providing, via the computing device, one or more alternate flight paths to a device.

In another particular implementation, a non-transitory computer-readable medium stores instructions that, when executed by one or more processors, cause the one or more processors to determine a probability that an aircraft follows a submitted flight path. The instructions also cause the one or more processors to in response to determining that the probability is less than a threshold, provide, one or more alternate flight paths to a device.

The features, functions, and advantages described herein can be achieved independently in various implementations or may be combined in yet other implementations, further details of which can be found with reference to the following description and drawings.

### BRIEF DESCRIPTION OF THE DRAWINGS

FIG. 1 is a diagram that illustrates a system configured to generate alternate flight paths.
FIG. 2 is a diagram of an illustrative example of determining groups of horizontal historical flight paths that have a flight path similarity metric.
FIG. 3 is a diagram of an illustrative example of determining groups of vertical historical flight paths that have a flight path similarity metric.
FIG. 4 is a flow chart of a method of generating alternate flights paths.
FIG. 5 is a block diagram of a computing environment including a computing device configured to support aspects of computer-implemented methods and computer-executable program instructions (or code) according to the present disclosure.

### DETAILED DESCRIPTION

Current air traffic management (ATM) systems rely heavily on predetermined flight plans that outline the path, altitude, and speed for aircraft navigation. Unfortunately, these plans often hinder optimal air traffic management due to their static nature and dependence on various limitations. For example, static models enforce rigid constraints based on aircraft capabilities and airspace restrictions, potentially ignoring dynamic factors like unpredictable weather patterns or evolving air traffic density. While air traffic controllers attempt to adjust plans based on real-time situations, manual intervention by air traffic controllers may introduce limitations and potential bottlenecks. Additionally, even necessary pilot deviations from these predefined plans can disrupt overall traffic flow and efficiency. In addition, the static nature of traditional flight plans often leads to suboptimal outcomes. The currently used static models do not capture real-time changes in weather, traffic, or other variables, resulting in suboptimal routes and increased fuel consumption. Furthermore, predefined plans struggle to dynamically adjust to unforeseen circumstances like sudden wind shifts or unexpected turbulence, potentially requiring manual intervention and causing delays. Accordingly, there is a need for a method and system configured to generate optimal alternate flight plans that can use real-time variations in weather, traffic, or other factors and balance safety and efficiency.

Aspects disclosed herein present systems and methods for generating potential alternate flight paths based on historical data. A device predicts before take-off, during flight, or both, if the aircraft will not fly what was planned (e.g., original flight plan). The device can make this determination based on information such as weather issues, capacity constraints in sectors, previous flights deviating from the flight plan, or a combination thereof. Based on the determination that the original flight path may not be followed, the device obtains historical flight path data for a particular operator (e.g., an airline or other entity), aircraft type, or both, flying from a departure airport to an arrival airport. The historical flight data includes individual flight paths for comparable aircraft (e.g., the same type or similar types of aircraft) associated with the operator for flights from the departure airport to the arrival airport. The device takes the flight paths and analyzes horizontal flight paths by clustering or categorizing the horizontal flights paths into groups based on their similarity using a chosen metric, such as distance, direction, one or more operations performed by the operator, or a combination thereof. This results in multiple groups of similar horizontal flight paths.

The device analyzes corresponding vertical flight paths for each group of similar horizontal flight paths. These vertical flight paths are clustered or categorized based on their own similarity using a relevant metric, such as an altitude profile or operations that affect the altitude that the aircraft is at. This results in several groups of similar vertical flight paths within each horizontal group. The device uses the information, such as weather issues, capacity constraints in sectors, and so forth, to determine the one or more alternate flight paths and provides the one or more alternate flight paths to the aircraft, an operator of the aircraft, or both, to enable personnel associated with the operator to change the flight plan based on the one or more alternate flight paths.

The techniques and systems described herein provide a technical advantage of predicting, before takeoff or during-flight, if an aircraft is likely to deviate from its submitted flight path. Based on historical flight path data, the system then provide a prioritized list of alternative flight paths ordered based on efficiency criteria (e.g., predicted fuel consumption, flight time, predicted carbon emissions, etc.).

The figures and the following description illustrate specific exemplary implementations. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific implementations or examples described below, but by the claims and their equivalents.

Particular implementations are described herein with reference to the drawings. In the description, common features are designated by common reference numbers throughout the drawings.

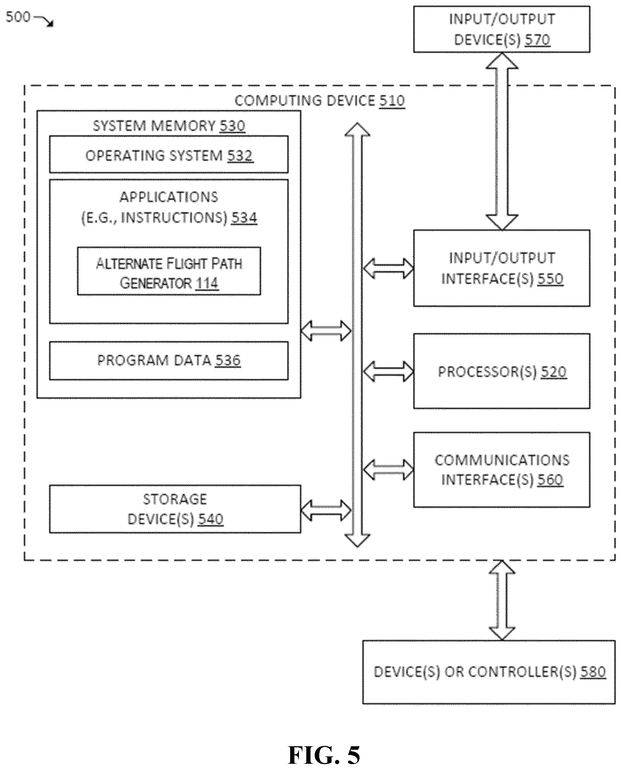

As used herein, various terminology is used for the purpose of describing particular implementations only and is not intended to be limiting. For example, the singular forms "a," "an," and "the" are intended to include the plural forms as well, unless the context clearly indicates otherwise. Further, some features described herein are singular in some implementations and plural in other implementations. To illustrate, FIG. 5 depicts a computing device 510 including one or more processors ("processor(s)" 520 in FIG. 5), which indicates that in some implementations the computing device 510 includes a single processor 520 and in other implementations the computing device 510 includes multiple processors 520. For ease of reference herein, such features are generally introduced as "one or more" features and are subsequently referred to in the singular or optional plural (as typically indicated by "(s)") unless aspects related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some implementations, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

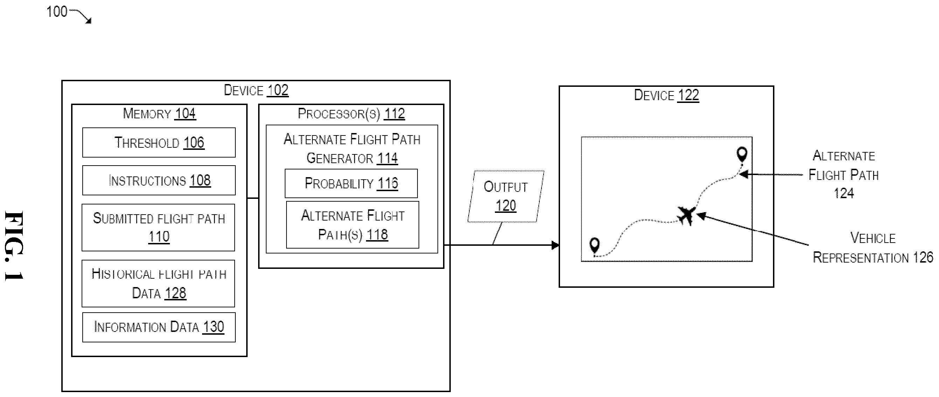

FIG. 1 is a diagram that illustrates a system 100 configured to generate alternate flight paths. The system 100 includes a device 102 coupled to a device 122. The device 102 includes a memory 104 coupled to one or more processors 112.

In a particular aspect, the device 102 can include, or be integrated in, at least one of an aircraft, a ground device, a water vehicle, a ground vehicle, an uncrewed vehicle, a tablet, a smart phone, a server, a computer-based tool, a laptop computer, or an input accessory device. The device 122 can include, or be integrated in, at least one of an aircraft, a ground device, a water vehicle, a ground vehicle, an uncrewed vehicle, a display device, a tablet, a smart phone, a computer-based tool, a laptop computer, or an input accessory device.

The processor(s) 112 includes an alternate flight path generator 114 that is configured to determine a probability 116 that an aircraft will follow a submitted flight path 110. In response to a determination that the probability 116 is less than a threshold 106 (e.g., 90%, 80%, 70%, or some other percentage), the alternate flight path generator 114 generates and provides one or more alternate flight paths 118 to the device 122. The memory 104 includes a non-transitory computer-readable medium (e.g., a computer-readable storage device) that stores instructions 108 that are executable by the processor(s) 112. The instructions 108 are executable to initiate, perform, or control operations described herein with reference to the alternate flight path generator 114. The memory 104 is configured to store data used or generated by the alternate flight path generator 114. For example, the memory 104 is configured to store the threshold 106 and a submitted flight path 110, historical flight path data 128 indicating individual flight paths associated with an operator of aircraft between a departure airport and an arrival airport.

During operation, the alternate flight path generator 114 obtains the data that includes the threshold 106, the submitted flight path 110, and information data 130 associated with the submitted flight path 110 from a first city (e.g., departure airport) to a second city (e.g., arrival airport). The information data 130 can include weather information (e.g., current weather and weather forecasts) occurring along the submitted flight path; congestion information occurring along the submitted flight path; delay information associated with the departure airport, the arrival airport, or both; notice to air missions occurring along the submitted flight path; or a combination thereof. The alternate flight path generator 114 obtains the information data 130 from the memory 104, one or more ground devices, one or more network devices, or combinations thereof. In an example, the alternate flight path generator 114 obtains the data in response to a user pre-flight check-in or a user request to generate alternate flight paths 118. To illustrate, the alternate flight path generator 114, in response to receiving user input from a pilot indicating a starting location (e.g., a first city or departure airport) of a submitted flight path 110 and an end location (e.g., a second city or arrival airport) of the submitted flight path 110, obtains the data that includes the threshold 106, the submitted flight path 110 and information data 130 (e.g., weather information, capacity constraints, and so forth) associated with the submitted flight path 110.

The alternate flight path generator 114 uses the obtained data to determine whether the aircraft is likely to follow the submitted flight path 110. For example, the alternate flight path generator 114 determines, prior to the aircraft taking off, a probability 116 that the aircraft will follow the submitted flight path 110. In determining the probability 116 the alternate flight path generator 114 uses the information data 130, such as current weather information at the departure airport, congestion information occurring along the submitted flight path 110, delay information occurring at the departure airport, notice to air missions relevant to the submitted flight path, or a combination thereof. In an example, the current weather information can indicate that, based on the wind patterns around the departure airport, the probability 116 of the aircraft following the submitted flight path 110 is low (e.g., less than the threshold 106). The alternate flight path generator 114, in response to a determination that the probability is less than the threshold 106, provides one or more alternate flight paths 118 (e.g., output 120) to device 122. The one or more alternate flight paths 118 can be ranked based on criteria such as, reduction in fuel consumption, reduction in flight time, reduction in CO₂ emissions, or a combination thereof.

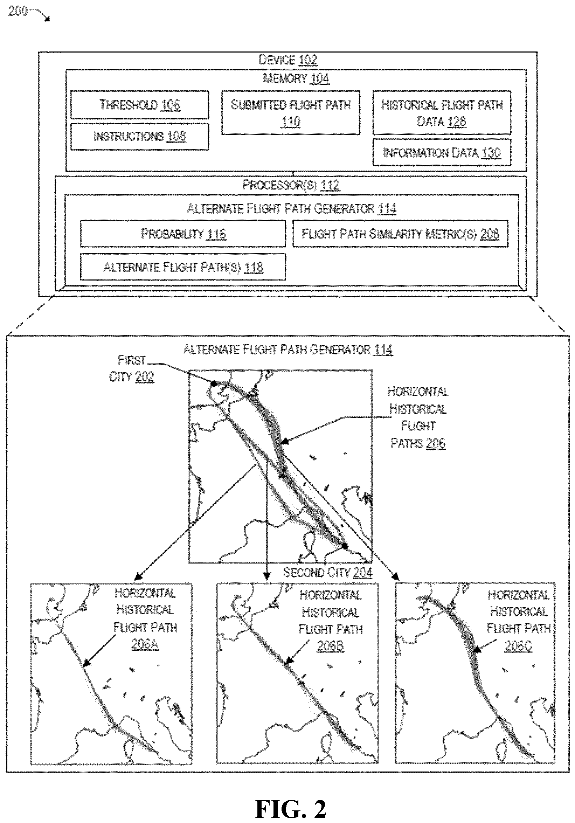

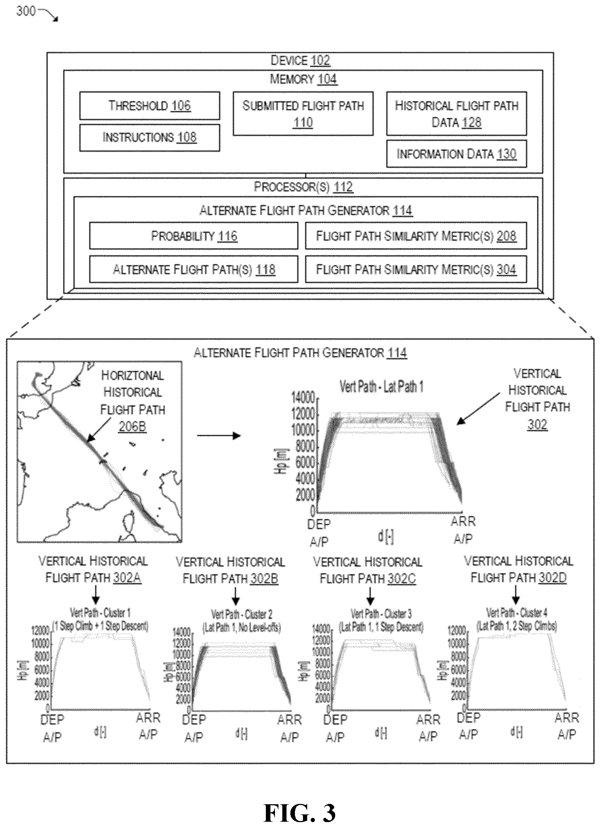

Prior to providing the one or more alternate flight paths 118, the alternate flight path generator 114 determines the one or more alternate flight paths 118 based on historical flight path data 128. The alternate flight path generator 114 obtains the historical flight path data 128 from the memory 104, one or more ground devices, one or more network devices, or a combination thereof. The historical flight path data 128 includes individual flight paths associated with the operator of the aircraft between the first city (e.g., the departure airport) and the second city (e.g., the arrival airport). During operation, the alternate flight path generator 114 can determine one or more groups of horizontal flights paths, vertical flight paths, or both, as further described with reference to FIGS. 2 and 3. The alternate flight path generator 114 determines one or more alternate flight paths 118 based on the information data 130 and the historical flight path data 128. The alternate flight path generator 114 then provides the one or more alternate flight paths 118 (e.g., output 120) to device 122.

The device 122 displays the one or more alternate flight paths 118. The display may be viewed, and information presented may be utilized, by personnel associated with the operator (e.g., a pilot of the aircraft, flight management personnel, etc.). In some implementations, the device 122 receives user input selecting one or more of the alternate flight paths 118. In this implementation, the device 122 displays the selected alternate flight path 124 and a vehicle representation 126. In some implementations, the device 122 is configured to select the alternate flight path 124 and display it and the vehicle representation 126.

In some aspects, the alternate flight path generator 114 determines, during the flight, a probability 116 that the aircraft will follow the submitted flight path 110. In determining the probability 116 the alternate flight path generator 114 uses the information data 130, such as current weather information along remaining portions of the flight path and at the arrival airport, congestion information occurring along the submitted flight path 110, delay information occurring at the arrival airport, or notice to air missions relevant to the submitted flight path, or a combination thereof. In an example, the congestion information indicates that the aircraft may experience delays if it continues to follow the submitted flight path 110. Based on this information the alternate flight path generator 114 determines that the probability 116 of the aircraft following the submitted flight path 110 is low (e.g., less than the threshold 106). The alternate flight path generator 114, in response to a determination that the probability is less than a threshold 106, obtains the historical flight path data 128. The alternate flight path generator 114 determines the one or more alternate flight paths 118 based on the historical flight path data 128 and the information data 130. The alternate flight path generator 114 then provides the one or more alternate flight paths 118 (e.g., output 120) to device 122. The device 122 displays the one or more alternate flight paths 118 (e.g., to the pilot of the aircraft).

A technical advantage of the system 100 is predicting, before takeoff or during-flight, if an aircraft is likely to deviate from its submitted flight path 110. Based on historical flight path data 128, the system 100 then provides a prioritized list of alternative flight paths 118 ordered based on efficiency criteria.

FIG. 2 is a diagram of an illustrative example 200 of determining groups of horizontal historical flight paths 206 that have a flight path similarity metric 208. The device 102 includes the memory 104 and the processor 112 described in FIG. 1. The alternate flight path generator 114 obtains information data 130 to determine whether an aircraft is likely to follow the submitted flight path 110. For example, the alternate flight path generator 114 determines, prior to the aircraft taking off or during flight, the probability 116 that the aircraft will follow the submitted flight path 110. In determining the probability 116, the alternate flight path generator 114 uses the information data 130, such as current weather information at the departure airport, congestion information occurring along the submitted flight path 110, delay information occurring at the departure airport, notice to air missions relevant to the submitted flight path, or a combination thereof. In an example, the current weather information can indicate that based on the wind patterns around the departure airport, the probability 116 of the aircraft following the submitted flight path 110 is low (e.g., less than the threshold 106). The alternate flight path generator 114, in response to a determination that the probability 116 is less than a threshold 106, obtains the historical flight path data 128 that includes individual horizontal historical flight paths 206 for flights of aircraft (e.g., aircraft of the same or similar type as the aircraft) associated with the operator between the first city 202 (e.g., the departure airport) and the second city 204 (e.g., the arrival airport). In some implementations, the alternate flight path generator 114 detects that the aircraft has deviated from the submitted flight path 110 when the aircraft is in flight.

The alternate flight path generator 114 can, based on the historical flight path data 128, determine one or more groups of horizontal historical flight paths 206 that have a flight path similarity metric 208. For example, the alternate flight path generator 114 can determine a first group of horizontal historical flight paths 206A, a second group of horizontal historical flight paths 206B, and a third group of horizontal historical flight paths 206C. Each of these groups of horizontal historical flight paths 206A, 206B,206C have a different flight path similarity metric 208.

The alternate flight path generator 114 can determine the one or more groups of horizontal historical flight paths 206 through the use of a clustering algorithm. In some implementations, the alternate flight path generator 114 converts the historical flight path data 128 into a format that is suitable for a clustering algorithm. This can involve several aspects, such as trajectory segmentation, which divides horizontal historical flight paths 206 into smaller segments based on specific criteria, such as time intervals or significant maneuvers; feature extraction, which extracts relevant features from each segment, such as average speed, altitude profile (including climb and descent rates), and turning characteristics; dimensionality reduction which applies techniques like Principal Component Analysis (PCA) to reduce the number of features in the historical flight path data 128, or a combination thereof.

The alternate flight path generator 114 is configured to define similarity metrics that are used in determining the flight path similarity metrics 208. Different similarity metrics capture various aspects for flights. For example, geographic similarity metrics such as, Hausdorff distance or Frechet distance, quantify a geometric difference between two individual horizontal historical flight paths; flight profile similarity compares factors such as, altitude profiles, average climb/descent rates, and speed variations along the historical flight path; and contextual similarity, which incorporates additional contextual information that can enhance the robustness of the clustering process. Examples of additional contextual information include weather patterns (e.g., wind vectors, turbulence zones, etc.), time of day, and air-traffic congestion zones.

The alternate flight path generator 114 is configured to use one or more clustering algorithms for determining the one or more groups of horizontal historical flight paths 206. The one or more clustering algorithms can include K-Means Clustering, Density-Based Clustering (e.g., DBSCAN, OPTICS), Hierarchical Clustering, and so forth.

After the one or more groups of horizontal historical flight paths 206 have been determined, the alternate flight path generator 114 generates the one or more alternate flight paths 118 based on the information data 130. For example, the alternate flight path generator 114 uses the informational data 130 relative to the submitted flight path 110, the first city 202, and the second city 204 to generate one or more alternate flight paths 118 from the first group of horizontal historical flight paths 206A, the second group of horizontal historical flight paths 206B, or the third group of horizontal historical flight paths 206C. The alternate flight path generator 114 sends the one or more alternate flight paths 118 (e.g., output 120) to the device 122. The device 122 displays on a display device the one or more alternate flight paths 118 and the submitted flight path 110. The device 122 is configured to obtain, via an input device, user input selecting either the one or more alternate flight paths 118 to follow or the submitted flight path 110. Based on the user input, the device 122 displays the selection of the one or more alternate flight paths 118 or the submitted flight path 110.

In some implementations, the alternate flight path generator 114 determines for each group of the one or more groups of horizontal historical flight paths 206 one or more groups of vertical flights paths having a vertical flight path similarity metric, as described in further detail in FIG. 3. The alternate flight path generator 114 after determining the one or more groups of vertical flight paths, generates one or more alternate flight paths 118 based on a selected group of the one or more groups of horizontal historical flight paths 206 and within that group selected a group of the one or more groups of vertical flight paths. The alternate flight path generator 114 sends the one or more alternate flight paths 118 (e.g., output 120) to the device 122.

During pre-flight operation, the alternate flight path generator 114 can select a particular group of horizontal historical flight paths 206 (e.g., horizontal historical flight path 206A) and generate one or more alternate flight paths 118 or generate one or more alternate flight paths 118 for each of the groups of the horizontal historical flight paths 206 (e.g., horizontal historical flight paths 206A, 206B, 206C). The selection of the particular group of horizontal historical flight paths 206 can be based on the information data 130. For example, the information data 130 can indicate that based on the wind patterns around the first city 202 (e.g., the departure airport) the group of horizontal historical flight path 206A is to be selected. The alternate flight path generator 114 generates the one or more alternate flight paths 118 and provides the one or more alternate flight paths 118 as the output 120 to the device 122, as previously described in FIGS. 1 and 2.

During in-flight operation, the alternate flight path generator 114 can determine based on the information data 130 or a detected deviation from the submitted flight plan that one or more alternate flight paths 118 are to be generated. The alternate flight path generator 114 selects a particular group of horizontal historical flight paths 206 based on the information data 130, the detected deviation from the submitted flight path 110, or both. For example, the information data 130 indicates congestion information occurring along the submitted flight path 110 or a notice to air missions relative to the submitted flight path 110. Based on the information data 130, the alternate flight path generator 114 selects a particular group of the horizontal historical flight paths 206 (e.g., horizontal historical flight path 206B). Based on the selection, the alternate flight path generator 114 generates the one or more alternate flight paths 118 and provides them (e.g., output 120) to the device 122, as previously described in FIGS. 1 and 2.

In the implementation shown in FIG. 2, three horizontal historical flight paths 206 are depicted, but in other implementations, a different number (e.g., 2, 4, 5, or some other number) of horizontal historical flight paths 206 can be determined by the alternate flight path generator 114 and used to generate the one or more alternate flight paths 118.

A technical advantage of the example 200 of using clustering for the generation of the one or more alternate flight paths 118 includes establishing baselines and identifying deviations. Clustering the historical flight path data 128 establishes well-defined historical flight corridors, which provides a robust baseline against which deviations from the submitted flight path 110 can be readily identified. This facilitates prompt attention to potential issues, such as emergency landings or unforeseen weather disturbances. Another technical advantage is generating one or more alternate flight paths 118 that are relevant. Upon detecting a deviation, the system 100 can quickly identify the most likely cluster based on the historical flight path data 128. This reduces the computational load for the alternate flight path generator 114 as it generates the alternate flight paths 118 based on the identified cluster. Another technical advantage of the example 200 is that the generated one or more alternate flight paths 118 based on the relevant cluster share similar altitude and speed profiles, which ensures compatibility with the aircraft type and prevailing weather conditions.

FIG. 3 is a diagram of an illustrative example 300 of determining groups of vertical historical flight paths 302 that have a flight path similarity metric 304. The device 102 includes the memory 104 and the processor 112 described in FIG. 1. The alternate flight path generator 114 obtains information data 130 to determine whether an aircraft is likely to follow the submitted flight path 110. For example, the alternate flight path generator 114 determines, prior to the aircraft taking off or during flight, the probability 116 that the aircraft will follow the submitted flight path 110. In determining the probability 116, the alternate flight path generator 114 uses the information data 130, such as current weather information at the departure airport, congestion information occurring along the submitted flight path 110, delay information occurring at the departure airport, notice to air missions relevant to the submitted flight path, or a combination thereof. In an example, the current weather information can indicate that based on the weather around a particular city along the path of the submitted flight path 110, the probability 116 of the aircraft following the submitted flight path 110 is low (e.g., less than the threshold 106). The alternate flight path generator 114, in response to a determination that the probability 116 is less than a threshold 106, obtains the historical flight path data 128 for flights of aircraft (e.g., aircraft of the same or similar type as the aircraft) associated with the operator between the first city 202 (e.g., the departure airport) and the second city 204 (e.g., the arrival airport). In some implementations, the alternate flight path generator 114 detects that the aircraft has deviated from the submitted flight path 110 when the aircraft is in flight.

As described in FIG. 2, the alternate flight path generator 114 determines the one or more groups of horizontal historical flight paths 206. In one aspect, the alternate flight path generator 114 can determine one or more groups of vertical historical flight paths 302 for each of the one or more groups of horizontal historical flight paths 206. In another aspect, the alternate flight path generator 114 selects a particular group of horizontal historical flight paths 206 and then determines one or more vertical historical flight paths 302 for that selected group of horizontal historical flight paths. The alternate flight path generator 114 selects that particular group of horizontal historical flight paths 206 based on the information data 130, detected deviation from the submitted flight path 110, or both.

As illustrated in FIG. 3, the alternate flight path generator 114 selected the horizontal historical flight path 206B. The alternate flight path generator 114 determines one or more groups of vertical historical flight paths 302 that have a flight path similarity metric 304. The alternate flight path generator 114 can determine the one or more groups of vertical historical flight paths 302 through the use of a clustering algorithm, as described above in FIG. 2. In a first example, the alternate flight path generator 114 determines a vertical historical flight path 302A that has a flight path similarity metric 304 of a one-step climb and a one-step descent. In a second example, the alternate flight path generator 114 determines a vertical historical flight path 302B that has a flight path similarity metric 304 of a lateral path with no level-offs. In a third example, the alternate flight path generator 114 determines a vertical historical flight path 302C that has a flight path similarity metric 304 of a lateral path one with a one-step descent. In a fourth example, the alternate flight path generator 114 determines a vertical historical flight path 302D that has a flight path similarity metric 304 of a lateral path with a two-step climb.

During pre-flight operation, the alternate flight path generator 114 can select a particular group of vertical historical flight paths 302 (e.g., vertical historical flight path 302A) and generate one or more alternate flight paths 118 or generate one or more alternate flight paths 118 for each of the groups of vertical historical flight paths 302 (e.g., vertical historical flight paths 302A, 302B, 302C, 302D). The selection of the particular group of vertical historical flight paths 302 can be based on the information data 130. For example, the information data 130 can indicate that based on the wind patterns at the first city 202 (e.g., the departure airport), the group of vertical historical flight path 302A is to be selected. The alternate flight path generator 114 generates the one or more alternate flight paths 118 and provides the one or more alternate paths 118 as the output 120 to the device 122, as described in FIGS. 1 and 2.

During in-flight operation, the alternate flight path generator 114 can determine based on the information data 130 or a detected deviation from the submitted flight plan that one or more alternate flight paths 118 are to be generated. The alternate flight path generator 114 selects a particular group of horizontal historical flight paths 206 and/or vertical historical flight paths 302 based on the information data 130, the detected deviation from the submitted flight path 110, or both. For example, the information data 130 indicates congestion information occurring along the submitted flight path 110 or a notice to air missions relevant to the submitted flight path 110. Based on the information data 130, the alternate flight path generator 114 selects a particular group of the horizontal historical flight paths 206 (e.g., horizontal historical flight path 206B) and a particular group of the vertical historical flight paths 302 (e.g., vertical historical flight path 302B). Based on the selection, the alternate flight path generator 114 generates the one or more alternate flight paths 118 and provides them (e.g., output 120) to the device 122.

In the implementation shown in FIG. 3, four (4) vertical historical flight paths 302 are depicted, but in other implementations, a different number (e.g., 2, 3, 5, or some other number) of vertical historical flight paths 302 can be determined by the alternate flight path generator 114 and used to generate the one or more alternate flight paths 118.

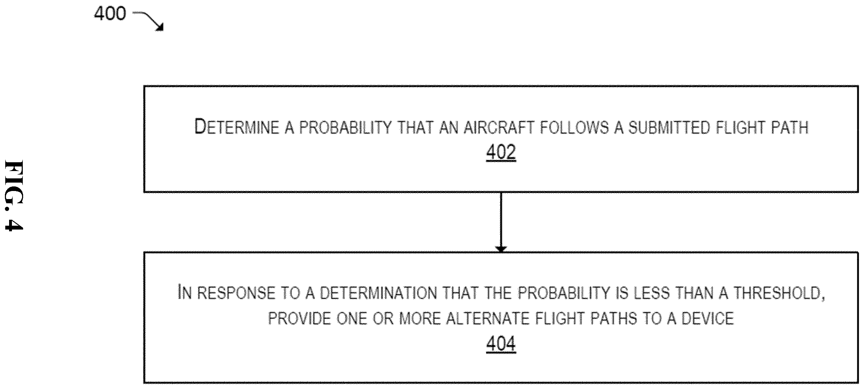

FIG. 4 is a flow chart of a method 400 of generating alternate flights paths 118. The method 400 may be performed by the system 100 of FIG. 1. The method 400 includes, at block 402, determining a probability 116 that an aircraft will follow a submitted flight path 110. For example, the alternate flight path generator 114 determines, prior to the aircraft taking off, a probability 116 that the aircraft will follow the submitted flight path 110. In determining the probability 116 the alternate flight path generator 114 uses the information data 130, such as current weather information at the departure airport, congestion information occurring along the submitted flight path 110, delay information occurring at the departure airport, notice to air missions relevant to the submitted flight path, or a combination thereof. In an example, the current weather information can indicate that, based on the wind patterns around the departure airport, the probability 116 of the aircraft following the submitted flight path 110 is low (e.g., less than the threshold 106).

The method 400 includes, at block 404, in response to a determination that the probability 116 is less than a threshold 106, providing one or more alternate flight paths 118 (e.g., output 120) to a device 122. For example, in response to receiving a user input indicating a starting location (e.g., a first city or departure airport) of a submitted flight path 110 and an end location (e.g., a second city or arrival airport) of the submitted flight path 110, the alternate flight path generator 114 obtains the data that includes the threshold 106, the submitted flight path 110 and information data 130 (e.g., weather information, capacity constraints, and so forth) associated with the submitted flight path 110.

The alternate flight path generator 114 uses the obtained data to determine whether the aircraft will follow the submitted flight path 110. For example, the alternate flight path generator 114 determines, prior to the aircraft taking off, a probability 116 that the aircraft will follow the submitted flight path 110. In determining the probability 116 the alternate flight path generator 114 uses the information data 130, such as current weather information at the departure airport, congestion information occurring along the submitted flight path 110, delay information occurring at the departure airport, notice to air missions relevant to the submitted flight path, or a combination thereof. In an example, the current weather information can indicate that, based on the wind patterns around the departure airport, the probability 116 of the aircraft following the submitted flight path 110 is low (e.g., less than the threshold 106). The alternate flight path generator 114, in response to a determination that the probability is less than a threshold 106, provides one or more alternate flight paths 118 (e.g., output 120) to device 122. The one or more alternate flight paths 118 can be ranked based on criteria such as, possible fuel consumption, flight time, carbon dioxide emissions, or a combination thereof.

Prior to providing the one or more alternate flight paths 118, the alternate flight path generator 114 determines the one or more alternate flight paths 118 based on historical flight path data 128. The alternate flight path generator 114 obtains the historical flight path data 128 from the memory 104, one or more ground devices, one or more network devices, or a combination thereof. The historical flight path data 128 includes individual flight paths for aircraft (e.g., the same type or a similar type of aircraft as the aircraft) associated with the operator for flights between a first city (e.g., departure airport) and a second city (e.g., arrival airport). During operation, the alternate flight path generator 114 can determine one or more groups of horizontal flights paths, vertical flight paths, or both, that have a similarity value, as described with reference to FIGS. 2 and 3. The alternate flight path generator 114 determines one or more alternate flight paths 118 based on the information data 130 and the historical flight path data 128. The alternate flight path generator 114 then provides the one or more alternate flight paths 118 (e.g., output 120) to device 122.

The device 122 displays the one or more alternate flight paths 118 to personnel associated with the operator. In some implementations, the device 122 obtains user input selecting one or more of the alternate flight paths 118. In this implementation, the device 122 displays the selected alternate flight path 124 and a vehicle representation 126. In some implementations, the device 122 is configured to select the alternate flight path 124 and display it and the vehicle representation 126.

In some aspects, the alternate flight path generator 114 determines, during the flight, a probability 116 that the aircraft will follow the submitted flight path 110. In determining the probability 116 the alternate flight path generator 114 uses the information data 130, such as current weather information at the arrival airport, congestion information occurring along the submitted flight path 110, delay information occurring at the arrival airport, notice to air missions relevant to remaining portions of the flight path, or a combination thereof. In an example, the congestion information indicates that the aircraft may experience delays if it continues to follow the submitted flight path 110. Based on this information the alternate flight path generator 114 determines that the probability 116 of the aircraft following the submitted flight path 110 is low (e.g., less than the threshold 106). The alternate flight path generator 114, in response to a determination that the probability is less than a threshold 106, obtains the historical flight path data 128. The alternate flight path generator 114 determines the one or more alternate flight paths 118 based on the historical flight path data 128 and the information data 130. The alternate flight path generator 114 then provides the one or more alternate flight paths 118 (e.g., output 120) to device 122. The device 122 displays the one or more alternate flight paths 118 to personnel associated with the operator (e.g., the pilot of the aircraft).

FIG. 5 is a block diagram of a computing environment 500 including a computing device 510 configured to support aspects of computer-implemented methods and computer-executable program instructions (or code) according to the present disclosure. For example, the computing device 510, or portions thereof, is configured to execute instructions to initiate, perform, or control one or more operations described with reference to FIGS. 1-4.

The computing device 510 includes one or more processors 520. The processor(s) 520 are configured to communicate with system memory 530, one or more storage devices 540, one or more input/output interfaces 550, one or more communications interfaces 560, or any combination thereof. The system memory 530 includes volatile memory devices (e.g., random access memory (RAM) devices), nonvolatile memory devices (e.g., read-only memory (ROM) devices, programmable read-only memory, and flash memory), or both. The system memory 530 stores an operating system 532, which may include a basic input/output system for booting the computing device 510 as well as a full operating system to enable the computing device 510 to interact with users, other programs, and other devices. The system memory 530 stores system program data 536, such as any data used or generated by the system 100, one or more modules, one or more machine learning models, or a combination thereof, as described with reference to FIGS. 1-4.

The system memory 530 includes one or more applications 534 (e.g., sets of instructions) executable by the processor(s) 520. As an example, the one or more applications 534 include instructions executable by the processor(s) 520 to initiate, control, or perform one or more operations described with reference to FIGS. 1-4. To illustrate, the one or more applications 534 include the alternate flight path generator 114.

In a particular implementation, the system memory 530 includes a non-transitory, computer readable medium storing the instructions that, when executed by the processor(s) 520, cause the processor(s) 520 to initiate, perform, or control operations to determine one or more alternate flight paths. The operations include determining a probability that an aircraft will follow a submitted flight path. The operations include in response to a determination that the probability is less than a threshold, provide one or more alternate flight paths to a device.

The one or more storage devices 540 include nonvolatile storage devices, such as magnetic disks, optical disks, or flash memory devices. In a particular example, the storage devices 540 include both removable and non-removable memory devices. The storage devices 540 are configured to store an operating system, images of operating systems, applications (e.g., one or more of the applications 534), and program data (e.g., the program data 536). In a particular aspect, the system memory 530, the storage devices 540, or both, include tangible computer-readable media (e.g., a storage device) and are not merely signals. In a particular aspect, one or more of the storage devices 540 are external to the computing device 510.

The one or more input/output interfaces 550 enable the computing device 510 to communicate with one or more input/output devices 570 to facilitate user interaction. For example, the one or more input/output interfaces 550 can include a display interface, an input interface, or both. For example, the input/output interface 550 is adapted to receive input from a user, to receive input from another computing device, or a combination thereof. In some implementations, the input/output interface 550 conforms to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). In some implementations, the input/output device 570 includes one or more user interface devices and displays, including some combination of buttons, keyboards, pointing devices, displays, speakers, microphones, touch screens, and other devices.

The processor(s) 520 are configured to communicate with devices or controllers 580 via the one or more communications interfaces 560. For example, the one or more communications interfaces 560 can include a network interface. The devices or controllers 580 can include, for example, the device 102 of FIG. 1.

In some implementations, a non-transitory, computer readable medium stores instructions that, when executed by one or more processors, cause the one or more processors to initiate, perform, or control operations to perform part or all of the functionality described above. For example, the instructions may be executable to implement one or more of the operations or methods of FIGS. 1-4. In some implementations, part, or all of one or more of the operations or methods of FIGS. 1-4 may be implemented by one or more processors (e.g., one or more central processing units (CPUs), one or more graphics processing units (GPUs), one or more digital signal processors (DSPs)) executing instructions, by dedicated hardware circuitry, or any combination thereof.

The illustrations of the examples described herein are intended to provide a general understanding of the structure of the various implementations. The illustrations are not intended to serve as a complete description of all of the elements and features of apparatus and systems that utilize the structures or methods described herein. Many other implementations can be apparent to those of skill in the art upon reviewing the disclosure. Other implementations can be utilized and derived from the disclosure, such that structural and logical substitutions and changes can be made without departing from the scope of the disclosure. For example, method operations can be performed in a different order than shown in the figures or one or more method operations can be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results can be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features can be grouped together or described in a single implementation for the purpose of streamlining the disclosure. Examples described above illustrate but do not limit the disclosure. It should also be understood that numerous modifications and variations are possible in accordance with the principles of the subject disclosure. As the following claims reflect, the claimed subject matter can be directed to less than all of the features of any of the disclosed examples. Accordingly, the scope of the disclosure is defined by the following claims and their equivalents.

Particular aspects of the disclosure are described below in sets of interrelated Examples:
According to Example 1, a device includes one or more processors configured to determine a probability that an airplane will follow a submitted flight path; and in response to a determination that the probability is less than a threshold, provide one or more alternate flight paths to a device.
Example 2 includes the device of Example 1, wherein the one or more processors are further configured to obtain historical flight path data that includes individual flight paths associated with an airline between a first city and a second city; obtain data relative to the submitted flight path, the first city, and the second city; and determine the one or more alternate flight paths based on the historical flight path data.
Example 3 includes the device of Example 2, wherein the data comprises one or more of: weather information occurring along the submitted flight path, at the first city, at the second city, or combinations thereof, congestion information occurring along the submitted flight path, delay information occurring at the first city, at the second city, or both, and notice to air missions relevant to the submitted flight path.
Example 4 includes the device of Example 3, wherein the determination of the probability is based on the data.
Example 5 includes the device of any of Example 1 to Example 4, wherein the determination of the probability occurs prior to the airplane taking off.
Example 6 includes the device of any of Example 1 to Example 5, wherein the determination of the probability occurs during flight.
Example 7 includes the device of any of Example 1 to Example 6, wherein the processors are further configured to display on the device the one or more alternate flight paths and the submitted flight path; and obtain user input selecting one of the one or more alternate flight paths.
Example 8 includes the device of any of Example 1 to Example 7, wherein the processors are further configured to display on the device the one or more alternate flight paths and the submitted flight path; and obtain user input selecting the submitted flight path.
Example 9 includes the device of any of Example 1 to Example 8, wherein the processors are further configured to obtain historical flight path data that includes individual flight paths associated with an airline between a first city and a second city; based on the historical flight path data, determine a first group of horizontal flight paths that have a first flight path similarity metric; based on the historical flight path data, determine a second group of horizontal flight paths that have a second flight path similarity metric, wherein the second group of horizontal flight paths are different than the first group of horizontal flight paths; obtain data relative to the submitted flight path, a first city, and a second city; and based on the data, generate the one or more alternate flight paths from the first group of horizontal flight paths or the second group of horizontal flight paths.
Example 10 includes the device of any of Example 1 to Example 9, wherein the processors are further configured to obtain historical flight path data that includes individual flight paths associated with an airline between a first city and a second city; based on the historical flight path data, determine a first group of vertical flight paths that have a first flight path similarity metric; based on the historical flight path data, determine a second group of vertical flight paths that have a second flight path similarity metric, wherein the second group of vertical flight paths are different than the first group of vertical flight paths; obtain data relative to the submitted flight path, a first city, and a second city; and based on the data, generate the one or more alternate flight paths from the first group of vertical flight paths or the second group of vertical flight paths.
Example 11 includes the device of any of Example 1 to Example 10, wherein the processors are further configured to obtain historical flight path data that includes individual flight paths associated with an airline between a first city and a second city; based on the historical flight path data, determine a first group of horizontal flight paths that have a first flight path similarity metric; based on the historical flight path data, determine a second group of horizontal flight paths that have a second flight path similarity metric, wherein the second group of horizontal flight paths are different than the first group of horizontal flight paths; based on the first group of horizontal flight paths, determine a first group of vertical flight paths that have a first vertical flight path similarity metric; based on the first group of horizontal flight paths, determine a second group of vertical flight paths that have a second vertical flight path similarity metric; based on the second group of horizontal flight paths, determine a third group of vertical flight paths that have a third vertical flight path similarity metric; based on the second group of horizontal flight paths, determine a fourth group of vertical flight paths that have a fourth vertical flight path similarity metric; obtain data relative to the submitted flight path, a first city, and a second city; and based on the data, generate the one or more alternate flight paths from one or more of: the first group of horizontal flight paths and first group of vertical flight paths, the first group of horizontal flight paths and second group of vertical flight paths, the second group of horizontal flight paths and third group of vertical flight paths, or the second group of horizontal flight paths and fourth group of vertical flight paths.
Example 12 includes the device of any of Example 1 to Example 11, wherein the one or more alternate flight paths are ranked.
According to Example 13, a method includes determining, at a computing device, a probability that an airplane will follow a submitted flight path; and in response to determining that the probability is less than a threshold, providing, via the computing device, one or more alternate flight paths to a device.
Example 14 includes the method of Example 13, and further includes obtaining historical flight path data that includes individual flight paths associated with an airline between a first city and a second city; obtaining data relative to the submitted flight path, the first city, and the second city; and determining the one or more alternate flight paths based on the historical flight path data.
Example 15 includes the method of Example 14, wherein the data comprises one or more of: weather information occurring along the submitted flight path, at the first city, at the second city, or combinations thereof, congestion information occurring along the submitted flight path, delay information occurring at the first city, at the second city, or both, and notice to air missions relevant to the submitted flight path.
Example 16 includes the method of Example 15, wherein the determining the probability is based on the data.
Example 17 includes the method of any of Example 13 to Example 16, wherein the determining the probability occurs prior to the airplane taking off.
Example 18 includes the method of any of Example 13 to Example 17, wherein the determining the probability occurs during flight.
Example 19 includes the method of any of Example 13 to Example 18, and further includes displaying on the device the one or more alternate flight paths and the submitted flight path; and obtaining user input selecting one of the one or more alternate flight paths.
According to Example 20, a non-transitory computer-readable medium comprising instructions that, when executed by one or more processors, cause the one or more processors to determine a probability that an airplane will follow a submitted flight path; and in response to a determination that the probability is less than a threshold, provide one or more alternate flight paths to a device.

For reasons of completeness, various aspects of the present disclosure are set out in the following numbered clauses:
Clause 1. A data processing device (102) for generating alternate flight plans, the device comprising:
   one or more processors (112) configured to:
   determine a probability (116) that an aircraft will follow a submitted flight path (110); and
   in response to a determination that the probability is less than a threshold (106), provide one or more alternate flight paths (118) to a device (122).
Clause 2. The device of clause 1, wherein the one or more processors are further configured to:
   obtain historical flight path data (128) that includes individual flight paths (206, 302) associated with an operator associated with the aircraft between a first city (202) and a second city (204);
   obtain data (130) relative to the submitted flight path, the first city, and the second city; and
   determine the one or more alternate flight paths based on the historical flight path data.
Clause 3. The device of clause 2, wherein the data comprises one or more of:
   weather information occurring along the submitted flight path, at the first city, at the second city, or combinations thereof,
   congestion information occurring along the submitted flight path, delay information occurring at the first city, at the second city, or both, and
   notice to air missions relevant to the submitted flight path.
Clause 4. The device of clause 3, wherein the determination of the probability is based on the data.
Clause 5. The device of any of clauses 1 to 4, wherein the determination of the probability occurs prior to the aircraft taking off.
Clause 6. The device of any of clauses 1 to 4, wherein the determination of the probability occurs during flight.
Clause 7. The device of any of clauses 1 to 6, wherein the one or more processors are further configured to:
   display on the device the one or more alternate flight paths and the submitted flight path; and
   obtain user input selecting one of the one or more alternate flight paths.
Clause 8. The device of any of clauses 1 to 7, wherein the one or more processors are further configured to:
   display on the device the one or more alternate flight paths and the submitted flight path; and
   obtain user input selecting the submitted flight path.
Clause 9. The device of any of clauses 1 to 8, wherein the processors are further configured to:
   obtain historical flight path data (128) that includes individual flight paths (206) associated with an aircraft between a first city (202) and a second city (204);
   based on the historical flight path data, determine a first group of horizontal flight paths (206A) that have a first flight path similarity metric (208);
   based on the historical flight path data, determine a second group of horizontal flight paths (206B) that have a second flight path similarity metric (208), wherein the second group of horizontal flight paths are different than the first group of horizontal flight paths;
   obtain data (130) relative to the submitted flight path, a first city, and a second city; and
   based on the data, generate the one or more alternate flight paths from the first group of horizontal flight paths or the second group of horizontal flight paths.
Clause 10. The device of any of clauses 1 to 9, wherein the processors are further configured to:
   obtain historical flight path data (128) that includes individual flight paths (302) associated with an operator between a first city (202) and a second city (204);
   based on the historical flight path data, determine a first group of vertical flight paths (302A) that have a first flight path similarity metric (304);
   based on the historical flight path data, determine a second group of vertical flight paths (302B) that have a second flight path similarity metric (304), wherein the second group of vertical flight paths are different than the first group of vertical flight paths;
   obtain data (130) relative to the submitted flight path, a first city, and a second city; and
   based on the data, generate the one or more alternate flight paths from the first group of vertical flight paths or the second group of vertical flight paths.
Clause 11. The device of any of clauses 1 to 8, wherein the processors are further configured to:
   obtain historical flight path data (128) that includes individual flight paths (206, 302) associated with an operator between a first city (202) and a second city (204);
   based on the historical flight path data, determine a first group of horizontal flight paths (206A) that have a first flight path similarity metric (208);
   based on the historical flight path data, determine a second group of horizontal flight paths (206B) that have a second flight path similarity metric (208), wherein the second group of horizontal flight paths are different than the first group of horizontal flight paths;
   based on the first group of horizontal flight paths, determine a first group of vertical flight paths (302A) that have a first vertical flight path similarity metric (304);
   based on the first group of horizontal flight paths, determine a second group of vertical flight paths (302B) that have a second vertical flight path similarity metric (304);
   based on the second group of horizontal flight paths, determine a third group of vertical flight paths (302C) that have a third vertical flight path similarity metric (304);
   based on the second group of horizontal flight paths, determine a fourth group of vertical flight paths (302D) that have a fourth vertical flight path similarity metric (304);
   obtain data (130) relative to the submitted flight path, a first city, and a second city; and
   based on the data, generate the one or more alternate flight paths from one or more of:
      the first group of horizontal flight paths and first group of vertical flight paths,
      the first group of horizontal flight paths and second group of vertical flight paths,
      the second group of horizontal flight paths and third group of vertical flight paths, and
      the second group of horizontal flight paths and fourth group of vertical flight paths.
Clause 12. The device of any of clauses 1 to 11, wherein the one or more alternate flight paths are ranked.
Clause 13. A computer-implemented method of generating alternate flight plans, the method comprising:
   determining, at a computing device (102, 510), a probability (116) that an aircraft will follow a submitted flight path (110); and
   in response to determining that the probability is less than a threshold (106), providing, via the computing device, one or more alternate flight paths (118) to a device (122).
Clause 14. The method of clause 13, further comprising:
   obtaining historical flight path data (128) that includes individual flight paths (206, 302) associated with an operator between a first city (202) and a second city (204);
   obtaining data (130) relative to the submitted flight path, the first city, and the second city; and
   determining the one or more alternate flight paths based on the historical flight path data.
Clause 15. The method of clause 14 wherein the data comprises one or more of:
   weather information occurring along the submitted flight path, at the first city, at the second city, or combinations thereof,
   congestion information occurring along the submitted flight path, delay information occurring at the first city, at the second city, or both, and
   notice to air missions relevant to the submitted flight path.
Clause 16. The method of clause 15, wherein the determining the probability is based on the data.
Clause 17. The method of any of clauses 13 to 16, wherein the determining the probability occurs prior to the aircraft taking off.
Clause 18. The method of any of clauses 13 to 16, wherein the determining the probability occurs during flight.
Clause 19. The method of any of clauses 13 to 18, further comprising:
   displaying on the device the one or more alternate flight paths and the submitted flight path; and
   obtaining user input selecting one of the one or more alternate flight paths.
Clause 20. A computer program product comprising instructions which, when the program is executed by a computer, cause the computer to carry out the steps of the method of any of clauses 13 to 19.

## Claims

1. A data processing device (102) for generating alternate flight plans, the device comprising:
one or more processors (112) configured to:
determine a probability (116) that an aircraft will follow a submitted flight path (110); and
in response to a determination that the probability is less than a threshold (106), provide one or more alternate flight paths (118) to a device (122).

2. The device of claim 1, wherein the one or more processors are further configured to:
obtain historical flight path data (128) that includes individual flight paths (206, 302) associated with an operator associated with the aircraft between a first city (202) and a second city (204);
obtain data (130) relative to the submitted flight path, the first city, and the second city; and
determine the one or more alternate flight paths based on the historical flight path data.

3. The device of claim 2, wherein the data comprises one or more of:
weather information occurring along the submitted flight path, at the first city, at the second city, or combinations thereof,
congestion information occurring along the submitted flight path,
delay information occurring at the first city, at the second city, or both, and notice to air missions relevant to the submitted flight path.

4. The device of claim 3, wherein the determination of the probability is based on the data.

5. The device of any of claims 1 to 4, wherein the determination of the probability occurs prior to the aircraft taking off.

6. The device of any of claims 1 to 4, wherein the determination of the probability occurs during flight.

7. The device of any of claims 1 to 6, wherein the one or more processors are further configured to:
display on the device the one or more alternate flight paths and the submitted flight path; and
obtain user input selecting one of the one or more alternate flight paths.

8. The device of any of claims 1 to 7, wherein the one or more processors are further configured to:
display on the device the one or more alternate flight paths and the submitted flight path; and
obtain user input selecting the submitted flight path.

9. The device of any of claims 1 to 8, wherein the processors are further configured to:
obtain historical flight path data (128) that includes individual flight paths (206) associated with an aircraft between a first city (202) and a second city (204);
based on the historical flight path data, determine a first group of horizontal flight paths (206A) that have a first flight path similarity metric (208);
based on the historical flight path data, determine a second group of horizontal flight paths (206B) that have a second flight path similarity metric (208), wherein the second group of horizontal flight paths are different than the first group of horizontal flight paths;
obtain data (130) relative to the submitted flight path, a first city, and a second city; and
based on the data, generate the one or more alternate flight paths from the first group of horizontal flight paths or the second group of horizontal flight paths.

10. The device of any of claims 1 to 9, wherein the processors are further configured to:
obtain historical flight path data (128) that includes individual flight paths (302) associated with an operator between a first city (202) and a second city (204);
based on the historical flight path data, determine a first group of vertical flight paths (302A) that have a first flight path similarity metric (304);
based on the historical flight path data, determine a second group of vertical flight paths (302B) that have a second flight path similarity metric (304), wherein the second group of vertical flight paths are different than the first group of vertical flight paths;
obtain data (130) relative to the submitted flight path, a first city, and a second city; and
based on the data, generate the one or more alternate flight paths from the first group of vertical flight paths or the second group of vertical flight paths.

11. The device of any of claims 1 to 8, wherein the processors are further configured to:
obtain historical flight path data (128) that includes individual flight paths (206, 302) associated with an operator between a first city (202) and a second city (204);
based on the historical flight path data, determine a first group of horizontal flight paths (206A) that have a first flight path similarity metric (208);
based on the historical flight path data, determine a second group of horizontal flight paths (206B) that have a second flight path similarity metric (208), wherein the second group of horizontal flight paths are different than the first group of horizontal flight paths;
based on the first group of horizontal flight paths, determine a first group of vertical flight paths (302A) that have a first vertical flight path similarity metric (304);
based on the first group of horizontal flight paths, determine a second group of vertical flight paths (302B) that have a second vertical flight path similarity metric (304);
based on the second group of horizontal flight paths, determine a third group of vertical flight paths (302C) that have a third vertical flight path similarity metric (304);
based on the second group of horizontal flight paths, determine a fourth group of vertical flight paths (302D) that have a fourth vertical flight path similarity metric (304);
obtain data (130) relative to the submitted flight path, a first city, and a second city; and
based on the data, generate the one or more alternate flight paths from one or more of:
the first group of horizontal flight paths and first group of vertical flight paths,
the first group of horizontal flight paths and second group of vertical flight paths,
the second group of horizontal flight paths and third group of vertical flight paths, and
the second group of horizontal flight paths and fourth group of vertical flight paths.

12. A computer-implemented method of generating alternate flight plans, the method comprising:
determining, at a computing device (102, 510), a probability (116) that an aircraft will follow a submitted flight path (110); and
in response to determining that the probability is less than a threshold (106), providing, via the computing device, one or more alternate flight paths (118) to a device (122).

13. The method of claim 12, further comprising:
obtaining historical flight path data (128) that includes individual flight paths (206, 302) associated with an operator between a first city (202) and a second city (204);
obtaining data (130) relative to the submitted flight path, the first city, and the second city; and
determining the one or more alternate flight paths based on the historical flight path data.

14. The method of claim 13, wherein the data comprises one or more of:
weather information occurring along the submitted flight path, at the first city, at the second city, or combinations thereof,
congestion information occurring along the submitted flight path,
delay information occurring at the first city, at the second city, or both, and notice to air missions relevant to the submitted flight path.

15. A computer program product comprising instructions which, when the program is executed by a computer, cause the computer to carry out the steps of the method of any of claims 12 to 14.
